# EUROPEAN PATENT SPECIFICATION

(11) **EP 0 659 540 B1**
(45) Date of publication and mention of the grant of the patent: **13.05.1998**
(21) Application number: 93830507.5
(22) Date of filing: 15.12.1993
(51) Int. Cl.: B29C 70/12, B29C 70/34, B29B 11/16, C08J 11/06, B29B 17/00, B29K 33/00, B29K 105/12, B29K 105/26, B29K 105/34, B29L 31/10

(54) **Process for producing insulating boards from the refuses of the nonwoven fabric production**
Verfahren zur Herstellung von Isolierplatten aus Vliesstoffabfällen
Procédé pour la fabrication de panneaux isolants en partant de déchets en étoffe-non-tissée

(43) Date of publication of application: 28.06.1995
(73) Proprietor: LA MARINA SPA, I-50041 Calenzano (Florence) (IT)
(72) Inventor: Nebbiai, Carlo, I-50019 Sesto Fiorentino (Florence) (IT)
(74) Representative: Sassatelli, Franco T., Dr.

(56) References cited:
- EP-A- 0 351 670
- EP-A- 0 518 004
- WO-A-93/25609
- DE-A- 3 337 955
- DATABASE WPI Section Ch, Week 7750, Derwent Publications Ltd., London, GB; Class ADC, AN 77-89002Y C50! & JP-A-52 130 858 (MATSUSHITA ELECTRIC WORKS) 2 November 1977
- DATABASE WPI Section Ch, Week 9350, Derwent Publications Ltd., London, GB; Class AEB, AN 93-402430 C50! & SU-A-1 776 668 (DON ARMOPLAST TECHN. INST.) 23 November 1992
- DATABASE WPI Section Ch, Week 8242, Derwent Publications Ltd., London, GB; Class ARW, AN 82-88949E C42! & JP-A-57 146 296 (JUJO PAPER MFG. K.K.) 9 September 1982

## Description

The invention refers to a processing for producing a new insulating material in rigid plane with distinguished sound absorbent, heat insulator and self-extinguished characteristics as well as a good damp resistance. Said new material to be produced by a new process of components quantitatively given in basic formulation which foresees the use of the conventional refuses coming from the working of nonwoven fabrics and synthetic fibers. In the finishing process of said textiles, particularly in the trimming of the sides, refuses are caused. Said refuses, long irregular strip shaped, to be arranged in bales to be sent into the area landfill for their disposal like special wastes.

Currently the necessity to must destroy said special wastes creates two drawbacks. The first drawback for the manufacturer who trust transport the special wastes into the area landfill or otherwise, within an agreement, he must make use of someone specialized in transport and the second drawback coming from the presence of a lot of special wastes to be destroyed in the local disposal plant. The described processing comes to avoid the two aforesaid drawbacks and moreover it permits the use of current refuses coming from the nonwoven fabric working like raw material for the producing of new insulating material.

The obtained insulating material, for effect of the connatural insulating features of its components, looks distinguished insulating characteristics from the noise and from the heat and also a good resistance to the damp and to the flame; this last feature particularly due to the fact that, if licked up from a flame, the material tends to put out the same emitting steam. These insulating features to be adjusted in the intensity of their effect so to be suited to the various use necessities only therefor opportunely changing the board density in the moulding phase.

The process foresees the pre-arrangement of the raw material consisting of the refuses formed by the strips cut long the sides in the nonwoven fabric finishing working. Said raw material taking through a collecting system from the various places to be prepared for the subsequent working acting its tertiary crushing by means of a knife cutting up machine.

After this treatment the raw material is then used in the process to produce a mass to be moulded. The process to produce mass foresees the mixing of the following components (in the given weight percent): 1) raw material consists of the refuses of nonwoven fabric working sodden with acrylic resin for 47,25%; 2) unsaturated polyester resin for 10%; 3) 1,1 Di(tert-butylperoxide)cyclohexane (organic peroxide) for 0,9%; 4) alumina trihydrate for 40%; 5) zinc stearate for 1,8% and 6) parabenzoquinone solution to 10% in styrene for 0,05%. In the mixing proceeding the raw material is initially mechanically mixed with the alumina trihydrate by means of a mixer. Then into the mixer the other components previously mixed by a propeller mixer are added. The mixing is going on for five minutes and then the obtained mass is discharged by means of a screw conveyor placed on the mixer bottom. The mass is then moulded by hot pressing at a temperature of 145°C by means of a punch press with a moulding pressure of 50 Kg/cm2 for a moulding time of five minutes per each centimetre of thickness. In this way square plate insulating boards are formed. To adeguate the obtained insulating material to the various use necessities is thereof changed the density during the moulding. To produce boards of lower density the ejector half of the punch press is to be foreseen with closing on steel end of stroke external frame. This external frame with its height thereof to the use necessities. Then the mass is put into the die for the moulding in the requested quantity. When the moulding is ended and with the punch forging press opened, the insulating board is taken out by means of a hydraulic device which raises to a taking place the board formed on the bottom of the fixed lower punch of the punch forging press. In an embodiment the mass, discharged by the screw conveyor at the end of the mixing, is put into film casing impermeable to the styrene and then these casings are housed in container so to permit the afterwards moulding.

Before the moulding the mass in the requested quantity is let into the fixed lower punch and it is processed by surface vibrators or with other vibrating means to increase the mass homogeneity. To colour the mass, so to produce coloured insulating boards, during the mixing are added suited pigments. The proceed can foresee also the use of a plant for continuous moulding. Moreover instead of acrylic resin can be used a different resin like phenol-formaldehyde resin or epoxy resin.

## Claims

1. Process for producing insulating boards from the refuses from the production of non-woven fabrics, wherein as raw material the strips cut from the sides of the non-woven fabric, and comminuted in a knife cutting machine are employed, wherein the following components are mixed:
(a) 47.25% of the above mentioned raw material sodden with acrylic resin,
(b) 10% of an unsaturated polyester resin,
(c) 0.9% of 1,1-di(tert.-butylperoxide)cyclohexane,
(d) 40% of alumina trihydrate,
(e) 1,8% of zinc stearate and
(f) 0.05% of a 10% solution of parabenzoquinone in styrene.
The mixing being carried out by the following steps:
(i) mixing the above mentioned components (a) and (d) by means of a mixer to form a first premix,
(ii) preparing a second premix from the remaining components (b), (c), (e) and (f) in a propeller mixer and
(iii) then mixing the thus obtained premixes for five minutes; (iv) discharging the thus obtained mass by means of a screw conveyor placed on the mixer bottom and
(v) subsequently moulding said mass by hot pressing at a temperature of 145°C by means of a punch press with a moulding pressure of 50 kg/cm² for a moulding time of five minutes per each centimetre of thickness to form square plate insulating boards.

2. Process for producing insulating boards from the refuses of the nonwoven fabric production, as defined in claim 1; wherein when the molding is ended and the punch forging press opened, the insulating board is taken out by means of a hydraulic device which raises to a taking place the board formed on the bottom of the fixed lower punch of the punch forging press.

3. Process for producing insulating boards from the refuses of the nonwoven fabric production, as defined in claim 1, wherein the mass, discharged by the screw conveyor at the end of the mixing, is put into film casing impermeable to the styrene and then these casing are put up in container so to permit the afterwards moulding.

4. Process for producing insulating boards from the refuses of the nonwoven fabric production, as defined in claim 1, wherein before the moulding the mass in the requested quantity is let into the fixed lower punch and it is processed by surface vibrators or with other vibrating means to increase the mass homogeneity.

5. Process for producing insulating boards from the refuses of the nonwoven fabric production, as defined in claim 1, wherein suited pigments are added during the mixing to colour the shaving mass so to produce coloured insulating boards.

## Patentansprüche

1. Verfahren zur Herstellung von Isolierplatten aus den Abfällen aus der Herstellung von Vliesstoffen, wobei als Rohmaterial die von den Seiten des Vliesstoffes abgeschnittenen und in einer Messerschneidmaschine zerkleinerten Streifen verwendet werden, wobei die folgenden Bestandteile vermischt werden:
(a) 47,25% des obengenannten Rohmaterials, durchtränkt mit Acrylharz,
(b) 10% eines ungesättigten Polyesterharzes,
(c) 0,9% 1,1-Di(tert.-butylperoxid)cyclohexan,
(d) 40% Aluminiumoxid-Trihydrat,
(e) 1,8% Zinkstearat und
(f) 0,05% einer 10 %igen Lösung von Parabenzochinon in Styrol,
wobei das Vermischen durch die folgenden Schritte durchgeführt wird:
(i) Vermischen der obengenannten Bestandteile (a) und (d) mittels eines Mischers, um eine erste Vormischung zu bilden,
(ii) Herstellen einer zweiten Vormischung aus den verbleibenden Bestandteilen (b), (c), (e) und (f) in einem Propellermischer und
(iii) anschließendes Vermischen der so erhaltenen Vormischungen für 5 Minuten;
(iv) Austragen der so erhaltenen Masse mittels eines Schraubenförderers, der am Boden des Mischers angeordnet ist, und
(v) anschließendes Ausformen besagter Masse durch Heißpressen bei einer Temperatur von 145°C mittels einer Lochpresse mit einem Formdruck von 50 kg/cm² für eine Formzeit von 5 Minuten pro jedem Zentimeter Dicke, um rechteckige Isolierplatten herzustellen.

2. Verfahren zur Herstellung von Isolierplatten aus den Abfällen der Vliesstoffherstellung nach Anspruch 1, wobei, wenn das Ausformen beendet und die Lochpresse geöffnet ist, die Isolierplatte mittels einer hydraulischen Vorrichtung entonommen wird, die die Platte, die am Boden der feststehenden unteren Form der Lochpresse ausgebildet ist, zu einer Abnahmestelle anhebt.

3. Verfahren zur Herstellung von Isolierplatten aus den Abfällen der Vliesstoffherstellung nach Anspruch 1, wobei die Masse, die durch den Schraubenförderer am Ende des Vermischens ausgetragen wird, in eine Folienumhüllung eingebracht wird, die für das Styrol undurchlässig ist, un anschließend diese Umhüllungen in einen Behälter gegeben werden, um das anschließende Ausformen zu ermöglich en.

4. Verfahren zur Herstellung von Isolierplatten aus den Abfällen der Vliesstoffherstellung nach Anspruch 1, wobei vor dem Ausformen die Masse in der erforderlichen Menge in die feststehende untere Form eingebracht wird und sie mit Oberflächenvibratoren oder mit anderen Vibrationsmitteln bearbeitet wird, um die Homogenität der Masse zu erhöhen.

5. Verfahren zur Herstellung von Isolierplatten aus den Abfällen der Vliesstoffherstellung nach Anspruch 1, wobei geeignete Pigmente während des Vermischens zugesetzt werden, um die Schnitzelmasse anzufärben, um gefärbte Isolierplatten herzustellen.

## Revendications

1. Procédé pour la fabrication de panneaux isolants en partant de déchets en étoffe-non-tissée, où comme matière brute on a utilisé des traits coupés aux bords du non-tissé broyés dans un broyeur à couteaux et où a mélangé les composants suivants:
(a) 47,25% de la matière indiqué ci-dessus imbidée en précédence de résine acrylique;
(b) 10% de résine polyster insaturée;
(c) 0,9% de 1,1 -di(ter-butylperoxy)cyclohexane;
(d) 40% d'alumine tri-hydratée;
(e) 1,8% de stéarate de zinc; et
(f) 0,05% d'une solution au 10% de parabenzoquinone en styrene;
le mélange est effectué selon les phases suivantes:
(i) en mélangeant les ingrédients (a) et (d) indiqués ci-dessus au moyen d'un mélangeur de façon à obtenir un premier mélange,
(ii) en préparant un second pré-mélange avec les ingrédients restants (b), (c), (e) et (f) au moyen d'un hélice mélangeur, et
(iii) en mélangeant ensuite les deux pré-mélanges ainsi obtenus pour cinq minutes;
(iv) en déchargeant la masse ainsi obtenue au moyen d'une vis d'Archimède placée au fond du mélangeur, et
(v) ensuite en estampant la dite masse par pressage à chaud à une température de 145 °C au moyen d'une presse verticale avec une pression d'estampage de 50 kg/cm2 pour un temps d'estampage de cinq minutes pour chaque centimètre d'épaisseur ainsi formant des panneaux isolants carrés en dalles.

2. Procédé pour la fabrication de panneaux isolants en partant de déchets en étoffe-non tissée, selon la revendication 1, où, lorsque l'estampage est terminé et avec la presse verticale ouverte, le panneau isolant est extrait au moyen d'un appareil hydraulique qui soulève le panneau, qui s'est formé au fond du bloc inférieur fixe de la presse, et le transporte jusqu'au plan de prélèvement.

3. Procédé pour la fabrication de panneaux isolants en partant de déchets en étoffe-non tissée, selon la revendication 1, ou la masse déchargée de la vis d'Archimède à la fin du mélange est placée dans une enveloppe de pellicule imperméable au styrène; ensuite les enveloppes susdites sont placées dans des conteneurs de stockage dans l'attentede l'estampage successif.

4. Procédé pour la fabrication de panneaux isolants en partant de déchets en étoffe-non tissée, selon la revendication 1, où - avant l'estampage - la masse susdite est introduite dans le bloc inférieur fixe selon la quantité nécéssaire et où elle est usinée par des vibrateurs de surface ou par d'autres moyens vibrants afin d'éléver son homgénéité.

5. Procédé pour la fabrication de panneaux isolants en partant de déchets en étoffe-non-tissée, selon la revendication 1, où des pigments convenables sont ajoutés pendant le mélange pour teindre la dite masse et produire des panneaux isolants en couleur.
